# DEMANDE DE BREVET EUROPEEN

(11) **EP 1 074 783 A1**
(43) Date de publication de la demande: **07.02.2001**
(21) Numéro de dépôt: 00116507.5
(22) Date de dépôt: 31.07.2000
(51) Int. Cl.: F16M 13/02

(54) **Béquille de montage pour appareillage et procédé de montage correspondant**

(30) Priorité: 03.08.1999 FR 9910075
(71) Demandeur: VALEO CLIMATISATION, 78321 La Verrière (FR)
(72) Inventeur: Giordano, Giancarlo, VALEO CLIMATISATION, 78321 La Verriere (FR); Casabella, Manel, VALEO CLIMATISATION, 78321 La Verriere (FR); Alessio, Maurizio, VALEO CLIMATISATION, 78321 La Verriere (FR)

(57) **Abrégé**

L'invention propose une béquille de montage présentant une rigidité d'ensemble élevée et une zone sensiblement moins rigide afin de libérer l'espace environnant.

La béquille de montage pour appareillage selon l'invention est de forme sensiblement allongée terminée par deux extrémités, solidaire du corps d'un élément principal (1) de l'appareillage et porteur d'un autre élément (3) sur au moins une extrémité libre. Cette béquille (5) présente une zone élémentaire (6) de rigidité suffisamment faible pour permettre une absorption irréversible d'énergie, cette zone se situant plus près du corps solidaire (1) que de l'extrémité libre et définissant une partie principale (5a) de béquille. La zone de moindre rigidité (6) est formée par un rétrécissement progressif dont l'épaisseur minimale (6a) agit en tant que charnière.

## Description

L'invention concerne une béquille pour le montage d'un appareillage composé de plusieurs éléments modulaires dans tout équipement ou structure adaptée, et un procédé de montage utilisant une telle béquille.

L'invention s'applique à tout domaine faisant intervenir de tels montages, par exemple les équipements des véhicules de transport, du bâtiment, ou du domaine médical. Ainsi, dans le domaine automobile, le tableau de commande d'une fonction, par exemple de la fonction chauffage/climatisation, est prépositionné sur le module de chauffage/climatisation à l'aide d'un support intégré. Une fois l'opération de montage du tableau de commande accomplie, ce type de support reste dépendant de l'appareillage et immobilise alors un certain espace sans réaliser de fonction particulière.

Il a été envisagé de rendre amovible ce support qui est alors démonté lorsque le montage est terminé. Cependant, le support amovible comporte un travail supplémentaire d'assemblage sur l'appareillage, puis de démontage et de sortie de ligne de fabrication. De plus, un traitement spécifique peut être nécessaire afin d'éviter la génération de résidus non contrôlée provenant de cet élément. Cette solution engendre donc des coûts supplémentaires et des pertes de temps.

L'invention vise à palier ces inconvénients en proposant une béquille de montage présentant une rigidité d'ensemble élevée et une zone sensiblement moins rigide.

Plus précisément, l'invention a pour objet une béquille de montage pour appareillage, de forme sensiblement allongée terminée par deux extrémités, solidaire du corps d'un élément principal de l'appareillage et porteur d'un autre élément sur au moins une extrémité libre, laquelle béquille présente une zone élémentaire de rigidité suffisamment faible pour permettre une absorption irréversible d'énergie, cette zone se situant plus près du corps solidaire que de la (des) extrémité(s) libre(s) et définissant une partie principale de béquille.

L'invention concerne également un procédé de montage mettant en oeuvre une telle béquille, et selon lequel une partie principale de la béquille est repliée le long du corps de l'élément principal de l'appareillage par torsion autour de la zone élémentaire de moindre rigidité après mise en place de l'élément porté par la béquille et immobilisation de l'extrémité libre de la béquille contre ledit corps. Un tel repliement permet de dégager l'espace autour de la béquille dépliée afin d'utiliser avantageusement cet espace à certains usages, par exemple le passage de pièces ou permettre la mise en place d'un autre composant.

Selon un mode de réalisation particulier, la zone de moindre rigidité forme un découplage entre la partie principale de la béquille et l'appareillage sur lequel elle est fixée, ce découplage exerçant une fonction d'amortissement pour absorber les efforts et/ou les chocs transmis à l'appareillage par la structure dans laquelle cet appareillage est monté. Un tel amortissement permet d'éviter les déformations ou les dégradations pouvant conduire à des dysfonctionnements, tels que l'augmentation des efforts de commande (interférences entre volet et boîtier du module de climatisation/chauffage, frottements) ou l'augmentation du bruit.

Dans une forme de réalisation particulière, le découplage peut conduire à la rupture entre l'appareillage et la béquille lorsque les vibrations de la structure et/ou les déformations dépassent un certain seuil, par exemple en cas de crash. Dans ce cas, le découplage est avantageusement réalisé selon une ligne de rupture préférentielle, matérialisée par exemple par des articulations formées de fixations plastiques fragilisées.

Dans un autre mode de réalisation particulier, la béquille assure non seulement le maintien de l'appareillage lors des opérations de manutention ou de montage, mais également une fois l'appareillage monté dans ladite structure, de manière à servir d'élément de rigidification conditionnelle. La rigidification de l'appareillage est dite conditionnelle du fait qu'elle est rompue au-delà d'un seuil de sollicitation minimal relativement faible dans le domaine considéré.

A cette fin, la béquille est fixée sur une traverse de structure, à l'aide de pattes de fixation vissées sur un boîtier formant un prolongement de la béquille, les pattes pouvant être additionnelles ou venir de matière de ladite traverse. Une liaison de couplage fragilisée est alors assuré entre la traverse et la béquille, par exemple par un étranglement entre le boîtier et le reste de ta béquille, ou par un moulage des pattes en matériau élastique, ou par une épaisseur réduite des pattes de manière à assurer en même temps te découplage. Alternativement, d'autres moyens de fixation peuvent être mis en oeuvre à la place des pattes, tels que des connexions à tête élargies.

D'autres caractéristiques et avantages de l'invention apparaîtront à la lecture de la description détaillée qui suit, relative à des exemples de réalisation illustrés par des figures annexées, qui représentent respectivement :
- la figure 1, une vue en coupe schématique d'un module de climatisation/chauffage et du tableau de commande de ce module, prémonté sur celui-ci par l'intermédiaire d'une béquille selon l'invention ;
- la figure 2, ce même tableau de commande après son montage dans le tableau de bord, la béquille étant en position repliée ;
- la figure 3, un exemple de zone de moindre rigidité servant d'amortisseur ;
- les figures 4a à 4c, des exemples de fixation de béquille de type amortisseur, et
- la figure 5, un exemple de fixation sans vissage d'une béquille de type amortisseur selon l'invention.

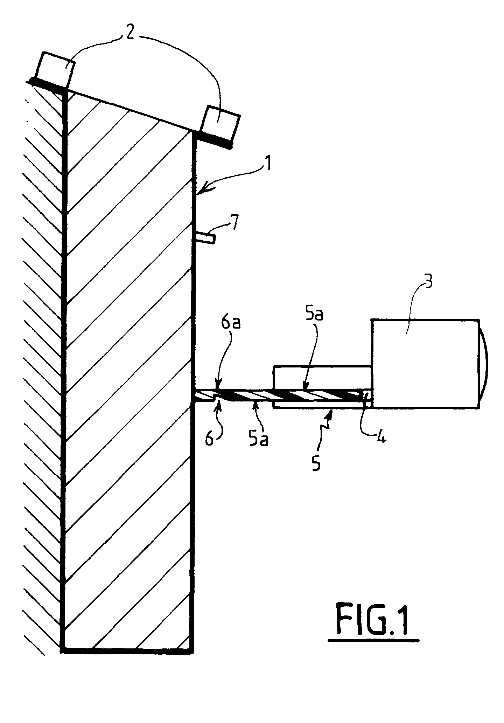

Sur la figure 1, qui illustre schématiquement un ensemble de climatisation/chauffage pour véhicule automobile, le module de ventilation 1 de cet ensemble est monté sous le tablier du tableau de bord à l'aide d'une armature 2. Lors du montage de cet ensemble, le tableau de commande 3 de climatisation/chauffage est solidaire du module principal 1 par l'introduction dans un logement 4 de ce tableau de commande d'une béquille 5 solidaire du module 1. Ainsi le tableau de commande est prémonté sur le module de climatisation/chauffage afin de faciliter son montage définitif, notamment par un prépositionnement de son câblage

Cette béquille est réalisée en tout matériau rigide, par exemple acier, matériau composite, polypropylène ou autre. Dans l'exemple de réalisation, cette béquille vient de moulage du corps formant une enveloppe externe de module de climatisation/chauffage.

Selon l'invention, cette béquille présente une zone de moindre rigidité 6, formée dans l'exemple par un rétrécissement progressif 6a du diamètre de la béquille sur une distance limitée, cette zone étant située à proximité du corps du module 1. Ainsi, la zone 6 permet le pivotement de la partie principale 5a de la béquille formée au-delà du rétrécissement, par l'exercice d'une torsion de la partie principale 5a de la béquille 5. Une butée de retenue 7 est également prévue sur le corps du module 1.

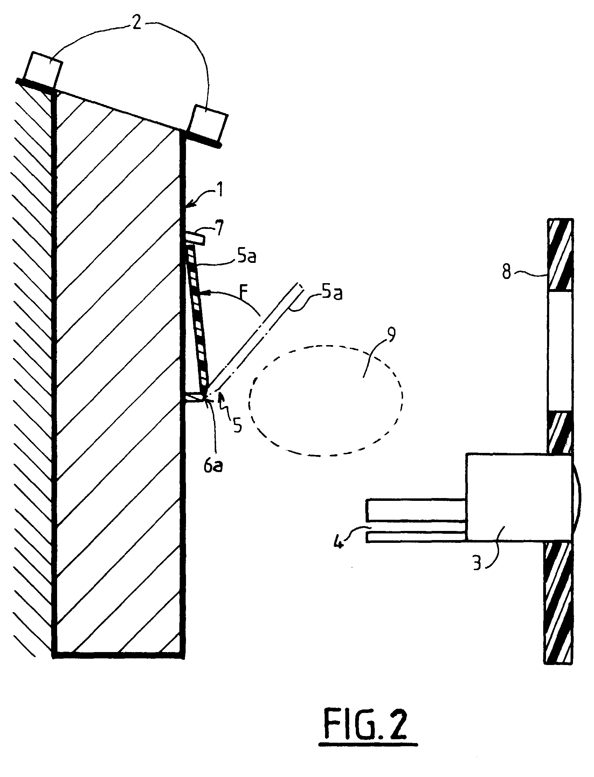

En référence à la figure 2, le tableau de commande 3 est ensuite monté sur le tableau de bord 8 du véhicule . La partie principale 5a de la béquille 5 est repliée contre le corps du module 1 et est maintenue selon cette position grâce à la butée 7. La flèche courbe F indique la rotation effectuée par la partie principale 5a autour d'une ligne formant charnière matérialisée par le rétrécissement 6a au niveau de son épaisseur de plastique minimal. Alternativement, la butée 7 peut être remplacée par tout moyen de fixation connu, par exemple par un clip.

Une fois rabattue, la partie principale 5a de la béquille 5 dégage un espace libre 9.

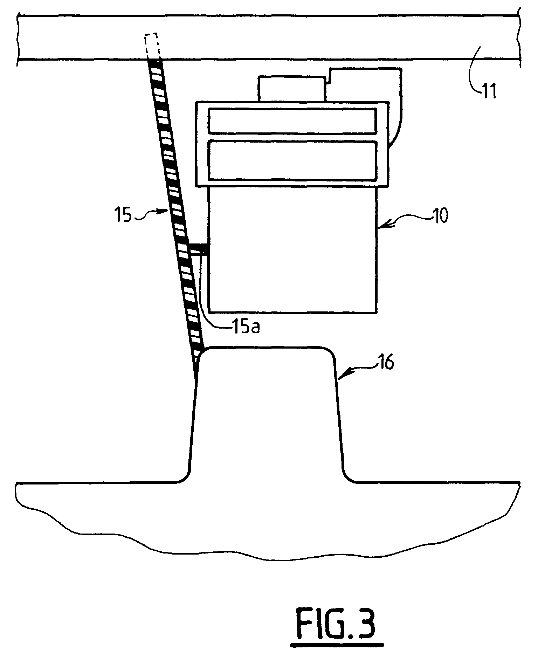

Selon un autre exemple de réalisation, la zone de moindre rigidité sert d'amortisseur, comme illustrée par la figure 3 qui illustre le montage d'un appareillage de climatisation 10 sur une traverse 11 d'un véhicule. La béquille 15 présente une zone de moindre rigidité formée par un amortisseur surmoulé, la béquille étant fixée à une traverse 11 par une de ses extrémités et prend appui sur une structure avoisinante 16 à son autre extrémité. Le couplage entre la béquille et l'appareillage peut être réalisé alternativement par une fixation avec un certain jeu ou un maintien lâche.

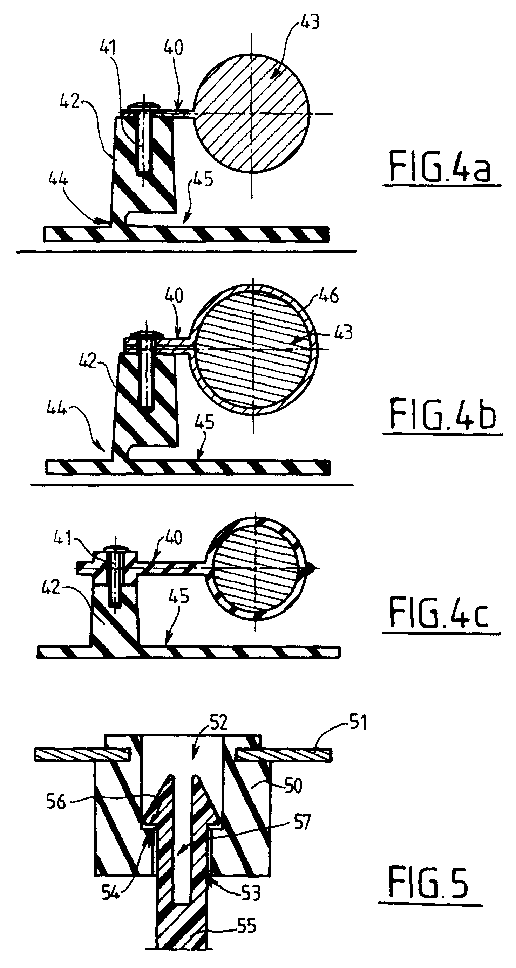

A titre d'exemple, les figures 4a à 4c illustrent une forme de réalisation particulière dans laquelle la zone de moindre rigidité permet également de réaliser une ligne de rupture. Sur ces figures, la béquille 43 est fixée sur l'appareillage par des pattes de fixation 40 maintenues par une vis 41 sur une borne 42 de l'appareillage 45 formant boîtier de fixation.

Plus particulièrement sur la figure 4a, les pattes de fixation 40 sont venues de matière de la béquille 43 de l'appareillage de climatisation/chauffage.

La zone de rupture est matérialisée par un étranglement 44 de la borne 42, reliant cette borne au reste de l'appareillage 45. En fonction du diamètre de l'étranglement et du matériau utilisé pour la béquille, la rupture est réalisée par cassure de cet étranglement lorsqu'un seuil correspondant de sollicitation est dépassé.

La figure 4b se distingue de la figure 4a en ce que les pattes de fixation 40 forment l'extrémité d'un collieeeer 46 monté autour de la béquille 43.

En variante, l'amortissement est réalisé par les pattes de fixation elles-mêmes, comme illustré sur la figure 4c. Les pattes 40 sont alors réalisées en élastomère pour réaliser l'amortissement et la zone de rupture. Une autre façon de réaliser cette zone de rupture est de prévoir des épaisseurs extrêmement réduites pour ces pattes de fixation. La borne 42 ne présente alors plus d'étranglement puisqu'elle n'a plus à assurer la fonction de rupture.

Selon un autre exemple de fixation de la béquille, tel qu'illustré sur la figure 5, une pièce en élastomère 50, fixée sur une paroi 51 de l'appareil de climatisation/chauffage, réalise une interconnexion entre l'appareillage et la béquille 55. La pièce 50 présente un logement interne 52 qui débouche en sortie de pièce sur une ouverture 53 rétrécie. Le rétrécissement définit des épaulements internes 54 sur lesquels viennent s'appuyer des élargissements 56 de l'extrémité fendue 57 de la béquille 55. De façon, la connexion entre l'appareillage et la béquille exerce à la fois la fonction amortisseur grâce à la pièce intermédiaire en élastomère, et la fonction rupture grâce à l'extrémité fendue de la béquille.

L'invention n'est pas limitée aux exemples de réalisation décrits présentés. Il est par exemple possible de prévoir plusieurs béquilles sur un même appareillage, notamment pour exercer les fonctions de rigidification de montage de différents appareils, par exemple de différents modules électroniques externes à disposer dans un véhicule. Par ailleurs, le rétrécissement peut être formé par une simple encoche ou par un double rétrécissement progressif, de part et d'autre de l'épaisseur minimale agissant en tant que charnière.

## Revendications

1. Béquille de montage pour appareillage, de forme sensiblement allongée terminée par deux extrémités, solidaire du corps d'un élément principal (1) de l'appareillage et porteur d'un autre élément (3) sur au moins une extrémité libre, laquelle béquille (5) est caractérisée en qu'elle présente une zone élémentaire (6) de rigidité suffisamment faible pour permettre une absorption irréversible d'énergie, cette zone se situant plus près du corps solidaire (1 ) que de la (des) extrémité(s) libre(s) et définissant une partie principale (5a) de béquille.

2. Béquille selon la revendication 1, dans laquelle la zone de moindre rigidité (6) est formée par un rétrécissement progressif dont l'épaisseur minimale (6a) agit en tant que charnière.

3. Béquille selon la revendication 1, dans laquelle la zone de moindre rigidité (6) forme un découplage entre la partie principale (5a) de la béquille et l'appareillage sur lequel elle est fixée, ce découplage exerçant une fonction d'amortissement pour absorber les efforts et/ou les chocs transmis à l'appareillage par la structure dans laquelle cet appareillage est monté.

4. Béquille selon la revendication 3, dans laquelle le découplage peut conduire à la rupture entre l'appareillage et la béquille lorsque les vibrations de la structure et/ou les déformations dépassent un certain seuil.

5. Béquille selon la revendication 4, dans laquelle le découplage est réalisé selon une ligne de rupture préférentielle formée à partir d'une fixation plastique fragilisée.

6. Béquille selon l'une quelconque des revendications 3 à 5, caractérisée en ce que la béquille est un élément de rigidification conditionnelle de l'appareillage.

7. Béquille selon la revendication 6, caractérisée en ce qu'elle est fixée sur une traverse (11) de structure, à l'aide de pattes de fixation (40) vissées sur un boîtier (42) formant un prolongement de la béquille.

8. Béquille selon la revendication 7, dans laquelle une liaison de couplage fragilisée est assuré par un étranglement (44) entre le boîtier et le reste de la béquille.

9. Béquille selon la revendication 7, dans laquelle une liaison de couplage fragilisée est assuré par un moulage des pattes en matériau élastique.

10. Béquille selon la revendication 7, dans laquelle une liaison de couplage fragilisée est assuré par une épaisseur réduite des pattes de manière à assurer en même temps le découplage.

11. Procédé de montage mettant en oeuvre une béquille selon l'une des revendications 1 ou 2, dans lequel une partie principale (5a) de la béquille (5) est repliée le long du corps de l'élément principal (1) de l'appareillage par torsion autour de la zone élémentaire de moindre rigidité (6a) après mise en place de l'élément (3) porté par la béquille et immobilisation de l'extrémité libre de la béquille contre ledit corps.
